# EUROPEAN PATENT SPECIFICATION

(11) **EP 0 789 499 B1**
(45) Date of publication and mention of the grant of the patent: **03.11.2004**
(21) Application number: 97850005.6
(22) Date of filing: 13.01.1997
(51) Int. Cl.: H04Q 7/22, H04Q 7/18, H04L 29/06

(54) **Circuit switched data services for GSM**
Leitungsvermittelte Daten-Dienste in GSM
Service de transmission de données en mode circuit pour GSM

(30) Priority: 12.02.1996 SE 9600499
(43) Date of publication of application: 13.08.1997
(73) Proprietor: TELIA AB, 123 86 Farsta (SE)
(72) Inventor: Winroth, Mats Olof, 135 54 Tyresö (SE); Eriksson, Göran, 137 55 Västerhaninge (SE)
(74) Representative: Hopfgarten, Nils

(56) References cited:
- EP-A- 0 377 136
- EP-A- 0 642 283
- WO-A-95/08900
- US-A- 4 837 800
- DATABASE INTERNET October 1985 J. POSTEL, J. REYNOLDS: "File Transfer Protocol (FTP)" XP002095476

## Description

### TECHNICAL FIELD

The present invention relates to a method for transmission in a telecommunication system of information between a mobile subscriber and an interactive data service network, wherein the subscriber sets up a session towards said interactive data service network by establishing a digital channel between subscriber and the interactive data service network.

### PRIOR ART

At utilization of interactive data services, as for instance WWW on the packet based Internet, the data carrier is only utilized at times. Between longer or shorter data transmissions the user can make a pause to take care of for instance the information which he/she has collected, and the data carrier then is unemployed.

A problem is that the circuit switched and comparatively expensive service which GSM offers today is not optimal. Either the user pays for the time his/her communication is "silent", or he/she connects and disconnects the call according to need. The latter solution is very time-consuming because the user each time must authenticate himself/herself towards his/her Internet-server.

Another problem with present circuit switched applications is that if the GSM-mobile during a long file transmission which is going on disconnects the transmission, due to for instance poor radio channel, the whole received file is lost, whereby the file has to be transmitted again.

In WO 95 08900 a mobile communication system and a method for connecting a remote workstation via a mobile communication system to a data network are disclosed. A session is stated from the remote workstation and a data connection is established over a radio path in the mobile communication network for the data session and the connection is extended between the mobile communication network and the data network. A data connection established over a radio path can be disconnected to minimize the radio path time for data communication, then keeping the extended connection active towards the data network.

EPA-0 642 283 describes bidirectional packet data transmission in a radio telephone network comprising a mobile and a fixed station. A parameter of the mobile station for setting up a data communication channel can be stored by the fixed station and a parameter of the fixed station for setting up a data communication channel can be stored by the mobile station for forming a virtual data communication channel between the mobile and the fixed stations. In this way establishment of a real data communication channel is expedited.

EP-A-0 377 136 disclose a communication system for high speed transmission of data over a link, such as a fibre optic link, between two terminals. To maintain synchronization among transmitted and received data packets at high speed of data transmission along the link two-way communication is provided and each packet is adapted to also include control words and status bits. In this way also error recovery is facilitated.

### BRIEF DESCRIPTION OF THE INVENTION

The aim with the present invention is to provide that circuit switched GSM-service becomes both cheaper and better by solving above mentioned problems.

This aim is achieved by a method according to claim 1. Thus a mobile user sets up a session towards an interactive service network, which session is active until the mobile user breaks the session, or one in a timer set time expires. The session is arranged independent to any number of connections and disconnections on a digital channel between the mobile user and the interactive service network.

The advantage with an independent session in relation to connections and disconnections on the digital channel is that the session is active in spite of that the digital cahnnel is disconnected. When the mobile user again connects himself/herself towards the interactive service network for transmission of data information, he/she need not authenticate himself/herself which results in a very rapid establishment of connection.

Another advantage with the method according to the present invention is that the user or the application breaks the connection when no data information is wanted to be transmitted, and sets up the connection automatically when data information shall be transmitted. This results in that the mobile user only need to pay for the service during the time the data transmission is performed.

Further characteristics of the present invention are given in the subclaims.

The present invention now will be described more in detail with references to the enclosed drawings.

### BRIEF DESCRIPTION OF THE DRAWINGS

Figure 1 shows schematically the in the communication system included units.
Figure 2 shows schematically a file which shall be transmitted divided into information blocks.

### DETAILED DESCRIPTION OF AN EMBODIMENT OF THE PRESENT INVENTION

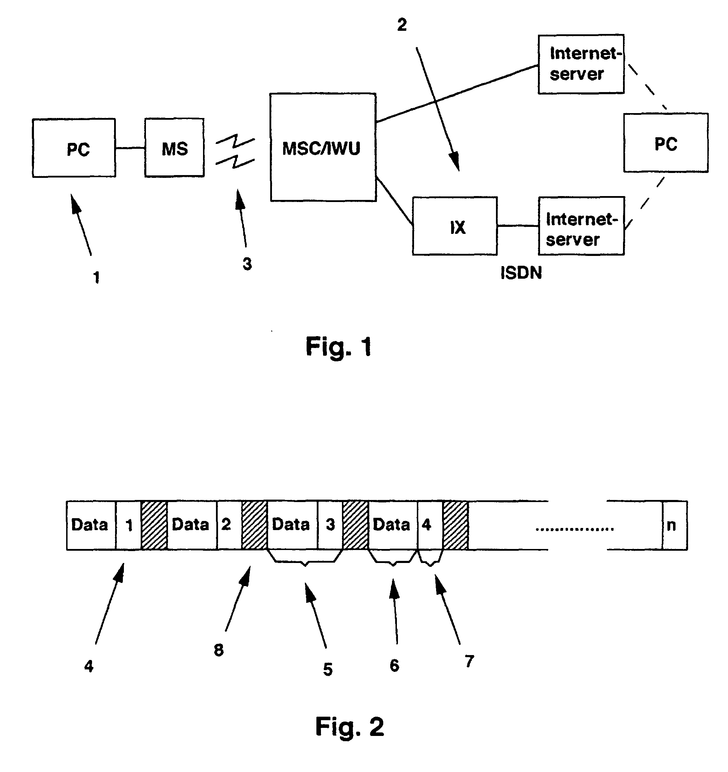

In Figure 1 the interactive service network consists of the packet based Internet 2. The mobile user 1 utilizes a GSM-terminal and the transmission of data information is made via the digital channel 3. The greatest advantage with an entire digital channel 3 in comparison with a modem transmission is that the set up time can be reduced from about 20 to 5 seconds. This is today possible to perform by an Internet-server connected directly to an MSC/IWU (Mobile Switching Centre) or within a near future via ISDN to just any Internet-server (which supports ISDN).

The mobile user 1 sets up a session towards the Internet-server 2 in the same way as present applications by calling and authenticating himself/herself by means of a password and a user identity. This session then shall be active until the mobile user breaks the session or a timer (for instance the time during which no data is transmitted or received) expires. The session will after that be able to be independent of a large number of connections and disconnections on the GSM-channel. The user 1 or the application breaks the connection when no data is wanted to be transmitted, or establishes connection when data shall be transmitted and consequently makes use of the channel as efficiently as possible.

What has been described above results in that the mobile subscriber in principle only need to pay for the service when it is utilized, which makes it considerably more attractive than before. The advantage will be even more pronounced when HSCSD (High Speed Circuit Switched Data) will be introduced in about a year. This GSM-data service is based on that the subscriber can use and be debited for more time slots in order to increase the data rate.

One example of how the present invention can be utilized is ftp-transmission from a conventional ftp-server.

The mobile subscriber 1 sets up a UDI (entire digital) call towards his/her Internet-server 2 and authenticates himself/herself. The ftp-server in question is contacted by the application and one by the subscriber required file is collected.

When the transmission is finished, the subscriber 1 disconnects the call (for instance by means of a "close"-button in the application), or the call is disconnected by that a comparatively short time of a timer expires (time during which no data information has been transmitted).

The mobile subscriber 1 reads and processes his/her file but wants to read more files, so he/she orders home more files.

The application now sets up a data connection towards the server but this time authenticates itself only by means of the A-number and/or with automatic session code word which is executed automatically by the applications. This means that the subscriber 1 directly can proceed its Internet-session without any time-consuming authentication procedure.

When the subscriber 1 wants to finish the session, this is signalled on the data channel 3 and chain and session are broken, after which a new login procedure including password and user identity must be performed to again transmit data towards Internet.

Alternatively a timer expires and the session is broken.

A problem with present applications is, as has previously been mentioned, that if the GSM-mobile during a long file transmission which is going on, due to a poor radio channel disconnects the channel 3, the entire amount of received data is lost and the file must be transmitted again in its entirety.

This problem is solved by the present invention by that the data information which is transmitted via the channel 3 is divided into numbered blocks as can be seen in Figure 1. A block number range 4 is valid for a whole session. Files which are transmitted via the channel 3 consequently are divided into n blocks 5, where each block includes on one hand data information 6 and on the other a block number 7. Between each block are provided just any number of filling bits 8 (bit stuffing) in order to separate two on each other following blocks.

Let us suppose that the mobile switching centre 2 (MSC/IWU) transmits file information to the mobile station 1 (MS) via the digital channel 3 according to the range of block numbers which is shown in Figure 2.

The mobile station 1 (MS) receives without problem the four first blocks whereupon the transmission 3 intentionally, or not intentionally, is broken. At a new connection trial MS transmits the block number of the last correctly received block, i.e. number 4, to the mobile switching centre (MSC/IWU). If the file transmission is not finished, the transmitting side 2 (MSC/IWU) now proceeds from where it finished, and consequently transmits the next block, i.e. block 5 etc.

With the present invention one will, accordingly, lose no information if a long file transmission which is going on for some reason is broken. The above mentioned protocol has similarities with the HDLC protocol family, but need not necessarily have error correction capacity.

What has been described above is only to be regarded as an advantageous embodiment of the present invention and the extent of protection of the invention is only defined by what has been indicated in the following patent claims.

## Claims

1. Method for transmission in a telecommunication system of information between a mobile subscriber (1) and an interactive data service network (2), wherein said subscriber (1) sets up a session towards said interactive data service network (2) by establishing a digital channel (3) between said mobile subscriber (1) and said interactive data service network (2), which session being active until said mobile subscriber (1) breaks the session and said session being arranged independent to any number of connections and disconnections on said digital channel (3), **characterized by** the steps of dividing information which is transmitted via the digital channel (3) by a protocol into numbered blocks (5), a block number range (4) being valid for a whole session, said blocks comprising a data information part (6) and a block number part (7), a number of filling bits (8) being provided between each block (5) to separate two successive blocks (5), and, if said transmission of information on the channel (3) is broken, executing a new login trial and transmitting a last correctly received block number part (7) in both directions, registering by transmitting equipment corresponding block number and proceeding with said transmission where it ended when the channel (3) was broken.

2. Method according to claim 1, **characterized in that** said session is broken when one in a timer set time expires.

3. Method according o claim 1 or 2, **characterized in that** said interactive data service network consists of the packet based Internet (2).

4. Method according to claim 3, **characterized in that** said digital channel (3) is established by an Internet-server being connected directly to an MSC/IWU.

5. Method according to any of the previous claims, **characterized in that** said mobile subscriber (1) or an application in said session breaks the digital channel (3) between the subscriber (1) and said Internet (2) when no data is wanted to be transmitted and sets up the digital channel (3) when one wants that data again shall be transmitted.

6. Method according to claim 5, **characterized in that** it includes the steps:
a) said mobile subscriber (1) sets up a UDI-call towards an Internet-server (2) and authenticates himself/herself, whereupon a session toward said Internet is established;
b) a ftp-server is contacted by the application and one by said subscriber (1) requested file is collected and transmitted to said subscriber (1) via the digital channel (3);
c) said mobile subscriber (1) disconnects the call or the transmission for reading and processing of the received file;
d) said mobile subscriber (1) establishes a new connection towards the Internet-server (2) for reading and processing more files and then authenticates himself/herself only by means of his/her A-number and/or with an automatic session code word which is executed automatically by the application:
e) said subscriber (1) finishes his/her session by signalling this on the digital channel (3), and the digital channel (3) and the session towards said Internet is broken, after which a new login procedure with complete authentication is performed to again transmit data towards the Internet.

## Patentansprüche

1. Verfahren zur Übertragung von Information zwischen einem Mobilfunkteilnehmer (1) und einem interaktiven Datendienstnetz (2) in einem Telekommunikationssystem, wobei der Teilnehmer (1) eine Sitzung zum interaktiven Datendienstnetz (2) durch Herstellung eines Digitalkanals (3) zwischen dem Mobilfunkteilnehmer (1) und dem interaktiven Datendienstnetz (2) aufbaut, wobei diese Sitzung solange aktiv ist, bis der Mobilfunkteilnehmer (1) die Sitzung abbricht und die Sitzung unabhängig von jeder Anzahl von verbindungen und Abtrennungen auf dem Digitalkanal (3) angeordnet wird; **gekennzeichnet durch** folgende Schritte: Teilen der über den Digitalkanal (3) übertragenen Information in nummerierte Blöcke (5) **durch** ein Protokoll, wobei ein Blocknummernbereich (4) für eine gesamte Sitzung gültig ist, wobei diese Blöcke einen Dateninformationsteil (6) und einen Blocknummernteil (7) umfassen, wobei eine Anzahl von Füllbits (8) zwischen jedem Block (5) vorgesehen wird, um zwei aufeinanderfolgende Blöcke (5) voneinander zu trennen, und wenn die Übertragung von Information auf dem Kanal (3) unterbrochen wird, Ausführen eines neuen Einbuchungsversuchs und Übertragen eines zuletzt richtig empfangenen Blocknummernteils (7) in beiden Richtungen, Registrieren **durch** Übertragen von geräteentsprechender Blocknummer und Fortfahren der Übertragung, wo sie endete, als der Kanal (3) unterbrochen wurde.

2. Verfahren nach Anspruch 1, **dadurch gekennzeichnet, dass** die Sitzung unterbrochen wird, wenn eine in einem Zeitgeber eingestellte Zeit abläuft.

3. Verfahren nach Anspruch 1 oder 2, **dadurch gekennzeichnet, dass** das interaktive Datendienstnetz aus dem paketbasierten Internet (2) besteht.

4. Verfahren nach Anspruch 3, **dadurch gekennzeichnet, dass** der Digitalkanal (3) durch direktes Anschließen eines Internetservers an eine MSC/IWU hergestellt wird.

5. Verfahren nach einem der vorhergehenden Ansprüche, **dadurch gekennzeichnet, dass** der Mobilfunkteilnehmer (1) oder eine Anwendung in der Sitzung den Digitalkanal (3) zwischen dem Teilnehmer (1) und dem Internet (2) abbricht, wenn keine Daten übertragen werden sollen, und den Digitalkanal (3) aufbaut, wenn gewünscht wird, dass Daten wieder übertragen werden sollen.

6. Verfahren nach Anspruch 5, **dadurch gekennzeichnet, dass** es folgende Schritte umfasst:
a) der Mobilfunkteilnehmer (1) baut eine UDI-Verbindung zu einem Internetserver (2) auf und authentifiziert sich, woraufhin eine Sitzung zum Internet hergestellt wird;
b) ein FTP-Server wird durch die Anwendung kontaktiert und eine von dem Teilnehmer (1) angeforderte Datei wird gesammelt und über den Digitalkanal (3) zu dem Teilnehmer (1) übertragen;
c) der Mobilfunkteilnehmer (1) trennt die Verbindung oder die Übertragung zum Lesen und Bearbeiten der empfangenen Datei;
d) der Mobilfunkteilnehmer (1) stellt eine neue Verbindung zum Internet-Server (2) zum Lesen und Verarbeiten von mehr Dateien her und authentifiziert sich dann nur mittels seiner/ihrer A-Nummer und/oder mit einem automatischen Sitzungscodewort, das von der Anwendung automatisch ausgeführt wird;
e) der Teilnehmer (1) beendet seine/ihre Sitzung durch Signalisieren dieser Beendigung auf dem Digitalkanal (3), und der Digitalkanal (3) und die Sitzung zum Internet wird abgebrochen, wonach ein neues Einbuchungsverfahren mit vollständiger Authentifizierung durchgeführt wird, um wieder Daten zum Internet zu übertragen.

## Revendications

1. Procédé de transmission dans un système de télécommunication d'informations entre un abonné mobile (1) et un réseau de service de données interactif (2), dans lequel le dit abonné (1) établit une session vers le dit réseau de service de données interactif (2) par établissement d'un canal numérique (3) entre le dit abonné mobile (1) et le dit réseau de service de données interactif (2), cette session étant active jusqu'à ce que le dit abonné mobile (1) interrompe la session, et la dite session étant prévue indépendamment d'un nombre quelconque de connexions et de déconnexions sur le dit canal numérique (3), **caractérisé par** les étapes suivantes : division des informations qui sont transmises via le canal numérique (3) par un protocole, en blocs numérotés (5), une plage de numéros de blocs (4) étant valable pour une session complète, les dits blocs comprenant une partie données (6) et une partie numéro de bloc (7), un certain nombre de bits de remplissage (8) étant prévus entre chaque bloc (5) pour séparer deux blocs successifs (5) ; et, si la dite transmission d'informations sur le canal (3) est interrompue, exécution d'un nouvel essai de connexion et transmission d'une partie numéro de bloc reçue correctement en dernier (7) dans les deux sens ; enregistrement par un équipement de transmission du numéro de bloc correspondant ; et reprise de la dite transmission à l'endroit où elle s'est arrêtée lorsque le canal (3) a été interrompu.

2. Procédé selon la revendication 1, **caractérisé en ce que** la dite session est interrompue lorsqu'un temps fixé par minuterie expire.

3. Procédé selon la revendication 1 ou 2, **caractérisé en ce que** le dit réseau de service de données interactif est le réseau Internet à base de paquets (2).

4. Procédé selon la revendication 3, **caractérisé en ce que** le dit canal numérique (3) est établi par un serveur Internet directement connecté à un centre de commutation de mobiles MSC/IWU.

5. Procédé selon une quelconque des revendications précédentes, **caractérisé en ce que** le dit abonné mobile (1) ou une application dans la dite session interrompt le canal numérique (3) entre l'abonné (1) et le dit Internet (2) lorsqu'on ne désire pas de transmission de données, et il établit le canal numérique (3) lorsqu'on désire que des données soient à nouveau transmises.

6. Procédé selon la revendication 5, **caractérisé en ce qu'**il comprend les étapes suivantes :
(a) le dit abonné mobile (1) établit un appel d'interface numérique universelle UDI vers un serveur Internet (2) et s'authentifie, après quoi une session vers le dit Internet est établie ;
(b) un serveur à protocole de transfert de fichier FTP est contacté par l'application et un fichier demandé par le dit abonné (1) est collecté et transmis au dit abonné (1) via le canal numérique (3) ;
(c) le dit abonné mobile (1) déconnecte l'appel ou la transmission, pour lecture et traitement du fichier reçu ;
(d) le dit abonné mobile (1) établit une nouvelle connexion vers le serveur Internet (2) pour lire et traiter des fichiers supplémentaires et il s'authentifie seulement au moyen de son numéro A et/ou avec un mot de code de session automatique qui est exécuté automatiquement par l'application ; et
(e) le dit abonné (1) finit sa session par signalisation de ce fait sur le canal numérique (3), et le canal numérique (3) et la session vers le dit Internet sont coupés, après quoi une nouvelle procédure de connexion avec authentification complète est effectuée pour transmettre à nouveau des données vers l'Internet.
